# EUROPEAN PATENT APPLICATION

(11) **EP 1 873 668 A1**
(43) Date of publication of application: **02.01.2008**
(21) Application number: 06013341.0
(22) Date of filing: 28.06.2006
(51) Int. Cl.: G06F 21/00, H04L 29/06

(54) **Integration of device integrity attestation into user authentication**

(71) Applicant: NOKIA SIEMENS NETWORKS GMBH & CO. KG, 81541 München (DE)
(72) Inventor: Abendroth, Jörg, 81737 München (DE); Cuellar, Jorge Dr., 82065 Baierbrunn (DE); Marhöfer, Michael Dr., 82041 Deisenhofen (DE); Rajasekaran, Hariharan, 81675 München (DE); Schäfer, Manfred, 85661 Forstinning (DE)

(57) **Abstract**

The invention proposes to combine user authentication and device integrity verification for protecting services accessible via networks. After performing an authentication of a service subscriber and a verification procedure for a device used by the service subscriber a certificate proving both the authentication of the service subscriber and the device verification is generated. This certificate is provided to the device where is can be employed for service access.

## Description

Network authentication and service access in current networks are tied to a subscriber identity (ID). This ID usually has the form of a unique many-digit number that is assigned to the subscriber. For mobile networks this number is referred to as IMSI (international mobile subscriber identity). The subscriber usually holds a removable module, the SIM card or USIM (UMTS SIM) card, where the ID is stored. This module is plugged into the device that the subscriber currently has in use, i.e. his mobile phone. Once the device is changed the module may be removed and inserted into a new device (e.g. a SIM card is extracted from an old mobile phone and used with a new one).

The evolution of user devices has brought about new security requirements. In the past most devices were closed, i.e. there were no open interfaces. The interaction with other devices was governed by the device capabilities as fixed by the device's producer. Since device production was usually assumed by companies with well-established relations with mobile network operators there were no security issues related to the device's functioning. The situation changed as smart-phones were introduced into the market. This new generation of mobile phones allows for enhancing device functions via open interfaces. New software components can be loaded and installed on the device. Hence, manipulations of device functions are possible. Device security has become an issue. Viruses, worms, and Trojan horses (collectively referred to as malware) are currently targeting smart phones. Malware may spread among different devices causing substantial damage.

In particular in view of the extended spectrum of functions of future phones (such as payment by phone) it is desirable to ensure or establish the reliability or trustworthiness of a device as a prerequisite for service access. Device security is at the heart of the work of the Trusted Computing Group (TCG). TCP specifications have been set up that describe mechanisms for measuring, verifying and attesting the integrity of a device using a Trusted Platform Module (TPM) chip. These mechanisms can be used to fend off or contain manipulation attacks.

There is a need for an efficient procedure to establish a trusted relationship that takes the above security and user authentication aspects into account. In particular, device integrity has to be ensured in addition to the user's identity.

The present invention tackles this problem. It is proposed to protect services accessible via a network by combining information drawn from subscriber (user) specific authentication and device specific verification in a certificate used for service access. Preferably, this certificate is sealed to the device or even a special (trusted) state of the device which is used for service access. Below individual steps of the invention are provided:
a) An authentication of a service subscriber (user) is performed. In a mobile network environment the Authentication and Key Agreement Protocol (AKA protocol) may be used for this purpose.
b) A device verification procedure is performed to check whether the device employed by the subscriber is in line with security requirements. For instance, procedures proposed by the trusted computing group (TCG) may be applied for verification.
c) A certificate is generated proving both the authentication of the service subscriber and the device verification, e.g. by including credentials derived from these procedures. For example, an attestation of the verification result (such as an attestation identity key AIK) may be included in the certificate. The certificate can be bound on the device in the specific device state that was verified, i.e. it will not be accessible in any other device state.
d) The certificate is transmitted or provided to the device.
e) The certificate is used for accessing the service.

In addition to the certificate a private key may be generated and provided to the device. A corresponding public key may form part of the certificate so that the key may be extracted by a service provider and employed for providing the service to the subscriber.

A key derived from the service subscriber authentication can be used to encrypt the information contained in the certificate and/or the private key. This key may be a session key or a (different) private key generated by a PKI infrastructure.

In addition, it is beneficial to seal the information contained in the certificate and/or the private key to the system state of the device that corresponds to the state of the device that is verified. This way a protection against manipulation of the device that takes place after verification is provided.

A server (below also referred to as TS-server or trusted computing server) may be provided for performing the verification of the device. Such a server may be a certification authority (CA) that can issue certificates in line with TCG specifications. According to the present invention certificates are issued that go beyond TCG proposals in that they include information such as credentials referring to user authentication. This information may be obtained from a user authentication process performed by the server itself. This way to proceed has the advantage that the user authentication information included in the certificate is recent information. Alternatively, user authentication information may be derived from a different network element that performed user authentication, e.g. as part of user registration at a network.

The device used by the subscriber preferably comprises a device-specific trusted platform module (such as specified by TCG) and a user-specific security module (e.g. SIM or USIM card).

To improve the internal security of the device a secured channel may be used for transmitting information between the device-specific trusted platform module and the user-specific security module. Communication between these modules may be necessary for accessing protected information. For instance, information can be first encrypted and then sealed. After reception by the device unsealing is performed by the device-specific module and decrypting is performed by the user-specific module.

The invention can be used for services accessed via a mobile phone. User authentication is common with this kind of services. The level of security is improved by the invention which adds device attestation and combines it with user authentication.

In a mobile network scenario the TC-Server may be physically co-located with a network application functions NAF or a bootstrapping server function BSF. Alternatively, a separate, dedicated platform may be set up.

Such a situation where user authentication and device authentication are disconnected is present in other scenarios as well, where the user authentication can be done by smart cards, internet based federation mechanisms (e.g. Liberty Alliance) etc. The solution proposed here is not only suited for combining 3GPP GBA user authentication and TCG device attestation but can also be adapted for the authentication mechanisms arising in other scenarios, in particular those scenarios where the TCG device attestation procedure can be applied.

The invention has a number of advantages:
■ Existing and well proven mechanisms may be re-used, combined and extended to get new (AAA) functionality which now includes TRUST awareness (i.e. reliable and existing network authentication services can be extended by functions that allow integration and provision of TRUST mechanisms specific for individual devices.)
■ It allows mobile network operators to base service access on TRUST policies (TCG Trusted Network Connect (TNC) like) and to provide integrated security and trust services to other service-/content-/application providers.
■ It enables subscribers to use portable SIM/USIM (i.e. their personal ID) in different TCG aware scenarios and devices that can be built on GAA/SSC mechanisms.
■ It enables TCG based services to rely on TCG-aware network certificates and network functions, in order to establish TCG based access policies without own efforts for certificate issuing and verification.
■ The 'conventional' role of mobile network operators for charging, ID providing and building trust (i.e. authentication) relations to customer equipment is fortified. New roles (TRUST verifier, TRUST provider, TRUST certificate and token issuer - TRUST in the TCG sense) are created based on well established (SIM based) security mechanisms and customer relationships (customer database can be re-used).
■ The integration of "remote (TRUSTed) device and credential management" with policy based service access by an entity located in the network is achieved. The network function that cares for the device management (exploiting TRUSTed computing paradigms) is preferably a mediating entity that can remotely configure TRUSTed devices to enforce service specific behavior and security control. The requirements (e.g. specific software or access profiles and policies) can be negotiated and provided by the TC-SERVER.
■ The TC-SERVER is a single point of interaction (decision point) for a new quality of TRUST enabled services. The new combined mechanism is more efficient and does not require interactions with several servers to establish both, the identity and the trust level - this will be expressed by one combination of certificates.

Below an embodiment of the invention is described with reference to figures. The figures show
Fig. 1: Illustration of the invention's concept
Fig. 2: A generic bootstrapping architecture
Fig. 3: Schematic illustration of employment of GAA/GBA/SSC credentials
Fig. 4: Device attestation according to a TCG procedure
Fig. 5: Use of 3GPP GAA/GBA/SSC credentials to generate and to apply TCG based credentials
Fig. 6: SIM/USIM binding to a certificate combining user-specific and device-specific credentials

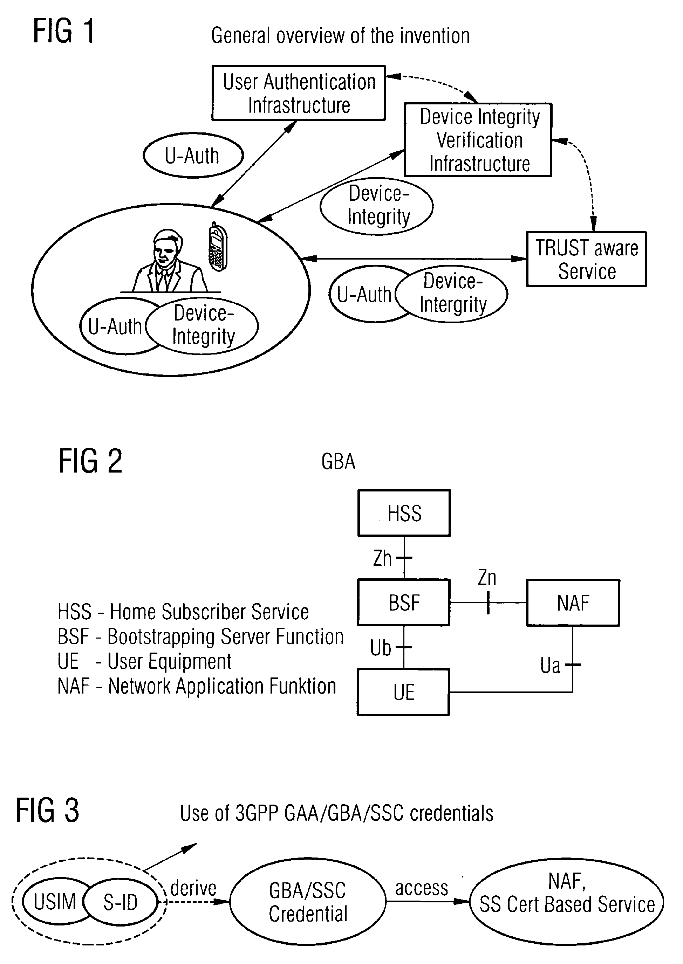

Fig. 1 illustrates a basic principle of the present invention. A trust aware service is offered. For subscribing to this service there are two requirements
- The user needs to be authenticated (U-Auth)
- The device's integrity needs to be established (Device-Integrity)

Instead of providing two separate infrastructures, a user authentication infrastructure for user authentication (U-Auth) and a device integrity verification infrastructure to ensure the integrity of the device (Device-Integrity), both is integrated into one mechanism for combined user authentication and device integrity attestation.

Below the invention is described in detail for mobile phones as user device. The invention is not limited to this case but can be employed in any scenario where user authentication and device integrity play a role.

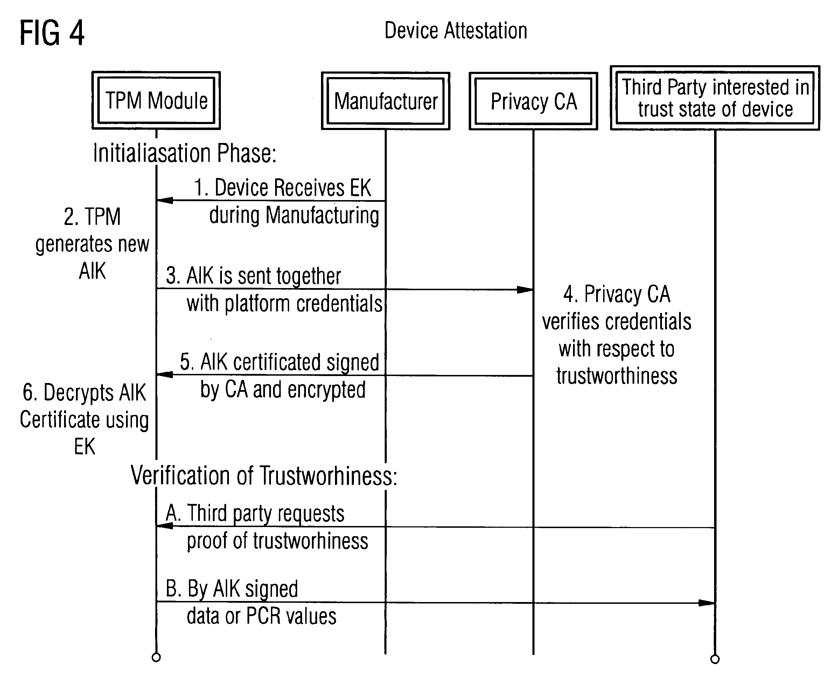

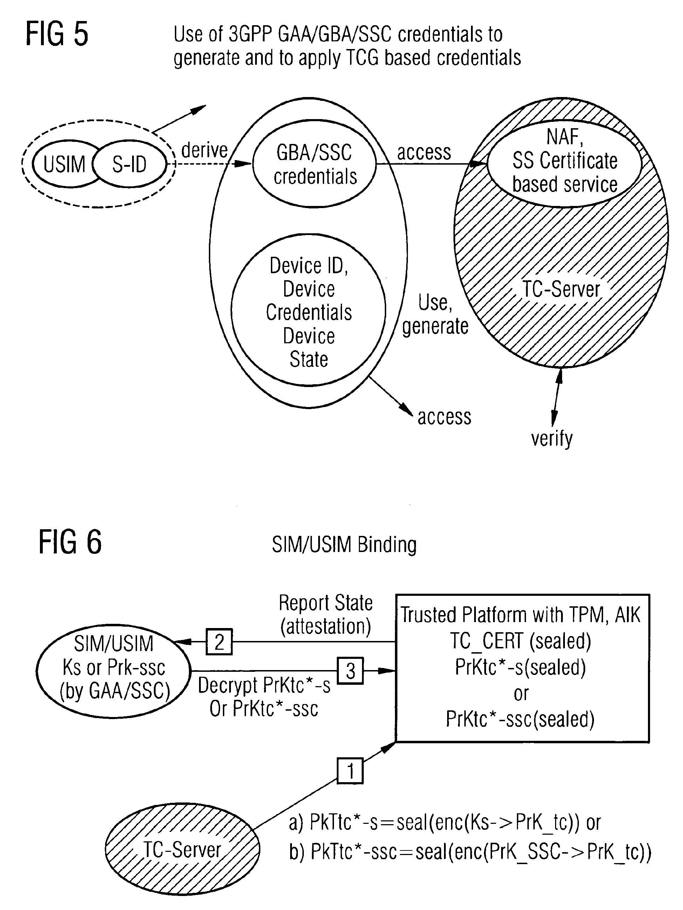

Firstly, a state of the art user authentication (Fig. 2 and Fig. 3) and a state of the art device integrity attestation (Fig. 4) are described. Thereafter it is detailed how both are combined into one mechanism (Fig. 5 and Fig. 6).

Mobile networks currently use 3GPP GAA/GBA, i.e. generic authentication architectures (GAA) and generic bootstrapping architectures (GBA) standardizes by the 3^{rd} generation partnership project (3GPP).

The network authentication and service access is tied to a subscriber ID. The subscriber possesses a removable module (SIM/USIM) that is plugged into his device. When the device is switched ON, the SIM authenticates the user by asking for a PIN (personal identification number) which the user can enter on the device.

On successful entry of the PIN, the SIM tries to connect to the mobile network using the Authentication and Key Agreement Protocol (AKA protocol) which forms part of the 3GPP GBA mechanism. The AKA protocol is laid down in the specification TS 33.102 and generally used for modern mobile networks, such as UMTS and IMS (IP multimedia subsystem) networks. With the AKA protocol authentication is performed during registration. Secret keys are generated and stored at the SIM card as well as at the service network. The secret keys are used to protect signaling between the device (more generally referred to as user equipment) and the service network. The Generic Bootstrapping Architecture is shown in Fig. 2.

The bootstrapping server function BSF and the user equipment UE mutually authenticate using the AKA protocol, and agree on session keys that can afterwards be applied between the user equipment UE and an operator-controlled network application function NAF. After the bootstrapping, the user equipment UE and the network application function NAF can run some application-specific protocol where the authentication /encryption of messages will be key-protected. For this purpose, session keys which were generated during the mutual authentication between the user equipment UE and the bootstrapping server function BS are passed on from the bootstrapping server function BSF to the network application function NAF via a protected connection.

As an enhancement of the 3GPP/GBA procedure TS 33.211 defines a support for subscriber certificates (SSC). The SSC scheme allows for issuing certificates by a PKI portal. These certificates are used for secure communication of the user equipment UE with network application functions (NAFs). In this case the use of certificates replaces the employment of session keys to protect the communication between UE and NAF.

Thus the GBA is also used to issue subscriber certificates for the user equipment UE to enable it to access NAFs which work with certificates instead of session keys. To this end, a NAF can act as a Public Key Infrastructure (PKI) portal and can issue certificates to the user equipment UE. For security reasons the certificates' validity may be short-term, e.g. corresponding to the typical duration of a session. The communication between the (NAF) PKI portal and the user equipment UE is secured by the session keys derived during the GBA run.

Fig. 3 shows a certificate-based service access. S-ID is the session ID, which results from a successful GBA run. GBA/SSC credentials are used to form a certification that is used to access a SSC-based service hosted on a NAF.

With the introduction of smart mobile devices which are much more open devices when compared to closed mobile devices of the past, the problem of device integrity arises. TCG specifications introduce techniques such as "attestation" based on AIKs (attestation identity keys) to bind the authentication/integrity attestation of the device to a 'unique' security module that is tightly built-in within the device (but not linked with a SIM/USIM based subscriber identity). This security module (or TPM module according to TCG terminology) is not removable in the sense that the user can simply shift 'his' module to another device (as opposed to a SIM card). Device integrity attestation is thus bound to the device and cannot be moved between devices. Also, a device can have several AIKs which makes the AIK unsuitable for using it for authentication of the same user using the same device e.g. in different modes. TCG-like mechanisms do not support direct subscriber identification as the authenticated entity in this case is the so-called "TRUSTed device".

Below, a standard device attestation procedure according to TCG specifications is described with reference to Fig. 4.

Following steps are performed in an initialization phase:
1. An endorsement key EK is provided from the manufacturer to the TPM module (TPM: trusted platform module).
2. The TPM generates a new attestation identity key AIK.
3. The AIK is sent together with platform credentials to a Privacy CA (CA: certification authority).
4. The credentials are verified by the Privacy CA with respect to trustworthiness.
5. The AIK is certificated, signed and encrypted by the Privacy CA and returned to the TPM module.
6. The TPM module decrypts the AIK certificate using the EK.

The AIK can be used for verification of trustworthiness. Such a verification procedure generally is performed along the following lines:
a) A third party requests a proof of trustworthiness
b) The TPM module transmits data or PCR (platform configuration register) values which are signed by AIK. There are several ways to issue AIKs. In the mobile TPM (trusted platform module) it will be possible to issue pre-generated AIKs using a special command or to use preinstalled AIKs for certain engines. In all cases the attestation identity key AIK will be used for integrity verification.

As shown above, two different sets of information about the user and his device are available:
- GBA - UMTS network (operator) specific and device independent user authentication.
- TCG - network-independent, device specific, possibly provider-specific device integrity attestation.

This correlates with the provisioning of corresponding modules, a device-specific trusted platform module and a user-specific security module (e.g. SIM card).

The invention proposes to combine user authentication information and device integrity attestation. The concept can be explained based on a mobile phone as an example. The existing technologies in the environment of mobile networks and services such as 3GPP GAA/GBA/SSC (abbreviated: GAA) architecture and TCG based device integrity attestation mechanisms are combined to support the binding of (removable) subscriber authentication based on portable SIM/USIM (provided by GBA) to the verified TRUST capabilities and credentials of an individual 'TRUSTed' device (that should be TCG compliant).

The invention supports applying the same SIM/USIM on different TRUSTed devices with proper (verifiable) application environments. Thus, it enables a subscriber to use (TRUST aware) services bound to its own ID, but enhanced by mechanisms that present the service an assertion (that can be proved) of the 'TRUST state' of a currently connecting device. The service is enabled to accept or deny the access based on device specific information that is not visible using a subscriber identity alone.

The invention allows combining both, the security mechanisms used by 3GPP GAA and those proposed by TCG, to build a new security relationship between a TCG compliant device (i.e. a device comprising a TPM module), a subscriber possessing the device (i.e. SIM, plugged into a device) and a service that is aware of TRUSTed computing mechanisms.

Fig. 5 describes basic principles of how the invention can be employed in a mobile network environment.

A specific NAF (working with GAA provided shared secrets), that is called below as 'TC-SERVER', is executing services, which support mechanisms and processes that are suited for TCG oriented remote device management. Alternatively, a SSC (Support for Subscriber Certificates) based service, can be extended and applied to that purpose.

The 'TC-SERVER' is also enabled to pre-condition the connecting device in a way that it behaves as it is expected by a determined TCG aware service that may have provided a specific profile, policy or other requirements for granting access. This pre-conditioning includes mechanisms such as remote software download, AIK issuing, remote device configuration and issuing of credentials and tokens that are related to platform credentials and system states of the device.

After permitting the device to access the TC-SERVER (this will work as described with GAA), these remote device management processes perform a device attestation (e.g. based on an attestation identity key AIK) as used within the TCG TRUST framework. Other mechanisms that rely on locally trusted software in a device are included as well.

As shown in Fig. 5, first GBA/SSC credentials are derived from a GAA registration procedure. These credentials are used to access a SSC based service on a NAF. This NAF is collocated or coincides with a TC-Server that performs an attestation of device integrity. The TC-Server generates device credentials that are combined with CBA/SSC credentials in a certificate used for service access.

After
- a successful verification of the system state of the requesting device (i.e. its active SW and HW environment, for example using a TPM_PCR_Quote command) and
- a fresh proof of the existence of the authenticated SIM during the attestation process (this can be done, using the temporary credentials provided by the GAA process. For example the shared secret key Ks can be applied (with a keyed hash function) or a signature of a private GAA key to cryptographically answer to a fresh challenge, requested during the attestation)
the TC-SERVER generates a temporary certificate that may include
- Assertions on the successful GAA authentication or a reference to the GAA credentials and the subscriber ID, for instance using the GAA B-TID (business transaction identifier). If accepted by a service, GAA credentials (i.e. shared secrets or also SSC like credentials) can be used as usual. This allows relying on a preceding network authentication that is bound to a well known subscriber ID.
- Assertions on a successful match with a TRUST profile or policy, or references to the current 'TRUST state' of the device, including SW state, configuration and information on accessories bound to the device (also TC mechanisms may be used to verify this)
- Additional access credentials, tokens, or licenses that are relevant for accessing and using the service
- a reference to relevant platform credentials and parameters allowing to classify a device
- a public key PbK_tc, that can be provided by the device (in a preceding protocol) or also by the TCG_NAF, or by the GAA mechanisms (depending on the security conditions and algorithms applied, also the GAA keys can be referenced)
- a time stamp to indicate the time of issuance.

After the generation of a certificate - which is referred to as TC_CERT below - the certificate is sent to the device using a secure channel. Also the associated 'private key' PrK_tc is generated in network and sent to the device, in a way that a subscriber can use but not modify it. TCG mechanisms can be used to accomplish this, e.g. relying on the secure SW running in the device or using TPM based remote protocols such as 'remote data binding' that makes use of TPM auditing commands.

The TC_CERT as well as the associated private key are sealed to the system state that corresponds to the state that is confirmed by the certificate.

Improving this and to assure presence of the SIM/USIM device when using the TC_CERT the following mechanism (or variants of it) can be applied (see Figure 6):
The public key PrK_tc is encrypted by applying the key Ks (session key) or the key PrK_SSC (private key resulting from a SSC procedure). Afterwards a seal is applied. The sealed and encrypted key is transmitted to a trusted platform module on the device. There the message is unsealed (assuming the device stat did not change) and the encrypted key is forwarded to the user-specific module provided by a SIM or USIM card. Upon decryption the public key PrK_TC is available for secured communication.

After successful attestation, the TC_SERVER sends the PrK_tc to the trusted device, protected with the GAA credentials (using either Ks or PbK-ssc) and seals it to the secure state of the platform. At the device only the presence of the authenticated SIM/USIM will be able to decrypt it. The trusted SW in the platform assures, that the decrypted private key is only used once per transaction (e.g. for authentication) and deleted afterwards. An additional secure channel between SIM/USIM and the secure Trusted Platform SW might be used to prevent from eavesdropping by an attacker, e.g. physically listening at the SIM/TD interfaces (e.g. HW-debugger, ICE etc.). When removing the SIM/USIM the trusted platform is not able to prove authentication of the TC_CERT.

When connecting to a service the TC_CERT is shown using a secure protocol (e.g. supporting challenge and response mechanisms to avoid replay attacks at TPM level. On higher levels, secure remote channels -such as TLS- can be used to communicate with trusted device software).

The TCG-aware service verifies the certificate either comparing an attestation and by comparison with "expected TRUST values" (these can be provided by communicating with the TC-SERVER), or simply relying on the sealing mechanism in the TRUSTed device. The service need not to verify the TRUST state of the device itself. GAA related functions can also be routed and interacted via the TC-SERVER. Thus, seen from the perspective of the service the TC-SERVER is the only verification entity.

## Claims

1. A method for protecting a service accessible via a network, comprising the steps of
a) performing an authentication of a service subscriber (user),
b) performing a device verification (attestation) for a device used by the service subscriber,
c) generating a certificate proving both the authentication of the service subscriber and the device verification,
d) providing the certificate to the device, and
e) using the certificate for accessing the service.

2. A method according to claim 1, further comprising
- generating a private key, and
- providing the private key to the device.

3. A method according to one of the preceding claims, further comprising
- generating a public key, and
- including the public key in the certificate.

4. A method according to one of the preceding claims, further comprising
- encrypting the information contained in the certificate and/or the private key by a key derived from the service subscriber authentication.

5. A method according to one of the preceding claims, further comprising
- sealing the information contained in the certificate and/or the private key to the system state of the device that corresponds to the state of the device that is verified.

6. A method according to one of the preceding claims 2 to 5,
**characterised in that**
- the device comprises a device-specific trusted platform module and a user-specific security module,
- after encryption and sealing the private key is transmitted to the trusted platform module,
- the private key is unsealed at the trusted platform module,
- the private key is transmitted to the security module,
- the private key is decrypted at the security module, and
- the private key is used for encrypting data transmitted when the service is used.

7. A method according to claim 6,
**characterised in that**
a secure channel is used transmitting information between the device-specific trusted platform module and the user-specific security module.

8. A method according to one of the preceding claims,
**characterised in that**
the device verification is performed according to TCG procedures.

9. A method according to one of the preceding claims,
**characterised in that**
upon device verification an attestation (AIK) is issued attesting a device state or device properties.

10. The method according to claim 9,
**characterised in that**
the attestation is included in the certificate.

11. A server comprising means for performing steps b), c), and d) of a method according to one of the claims 1-10.

12. The server of claim 11, further comprising means for performing step a) of a method according to one of the claims 1-10.

13. A device comprising means for performing a method according to one of the claims 1-10, comprising a device-specific trusted platform module and a user-specific security module.

14. The device of claim 13,
**characterised in that**
a secure channel is set up between the modules.
